# EUROPÄISCHE PATENTSCHRIFT

(11) **EP 1 341 642 B1**
(45) Veröffentlichungstag und Bekanntmachung des Hinweises auf die Patenterteilung: **03.08.2011**
(21) Anmeldenummer: 01953288.6
(22) Anmeldetag: 01.06.2001
(51) Int. Cl.: B23P 21/00, B23P 19/04, B62D 65/00, B60J 5/04

(54) **VERFAHREN UND VORRICHTUNG ZUM ZUSAMMENBAU EINER FAHRZEUGTÜR**
METHOD AND DEVICE FOR ASSEMBLING A VEHICLE DOOR
PROCÉDÉ ET DISPOSITIF POUR ASSEMBLER UNE PORTIÈRE DE VÉHICULE

(30) Priorität: 07.12.2000 AT 9062000
(43) Veröffentlichungstag der Anmeldung: 10.09.2003
(73) Patentinhaber: Uniport S.A.S., 57913 Hambach Cedex (FR)
(72) Erfinder: SALING, Jean, F-67260 Harskirchen (FR); KNECHT, Frank, F-57430 Sarralbe (FR); SCHMITT, Philippe, F-57660 Lelling (FR)
(74) Vertreter: Schupp, Bernhard
(86) Internationale Anmeldenummer: PCT/IB2001/001405
(87) Internationale Veröffentlichungsnummer: WO 2002/045901

(56) Entgegenhaltungen:
- EP-A- 0 742 117
- WO-A-92/17312
- DE-A- 19 748 021
- DE-A- 19 856 126
- DE-C- 3 726 292
- PATENT ABSTRACTS OF JAPAN vol. 2000, no. 02, 29. Februar 2000 (2000-02-29) -& JP 11 321735 A (HIROTEC CORP), 24. November 1999 (1999-11-24)

## Beschreibung

Die Erfindung handelt von einem Verfahren und einer Vorrichtung zum Zusammenbau einer Türe oder sonstigen Klappe eines Fahrzeuges, etwa einer Motorhaube, welche aus einem Strukturteil, montagerelevanten Anbauteilen und weiteren Teilen, Verkleidungs- und Zubehörteilen, besteht. Der Strukturteil eines derartigen Bauteiles ist der meist innenliegende Teil, der dem Bauteil seine Festigkeit verleiht.

Bewegliche Bauteile wie Türen, Motorhauben, Kofferraumdeckel oder andere Klappen müssen genau in den Fahrzeugkörper passen, das heisst die Breite der Fugen muss rundum gleich und ihre Aussenkontur muss mit der des Fahrzeuges bündig sein. Ausserdem sind sie mit Scharnieren und einem Schloss ausgestattet, die für tadelloses Funktionieren ebenso genau passen müssen. Bei Türen kommen dazu noch die meist getrennt gefertigten Fensterrahmen und Fenster. Scharniere, Schloss und Fensterteile sind die montagerelevanten Anbauteile.

Bei all dem sind Fertigungstoleranzen, sowohl der einzelnen Teile, als auch des Fahrzeugkörpers, der den Bauteil aufnehmen muß, bei Serienfertigung besonders zu berücksichtigen. Das ist besonders schwierig, wenn dem Fahrzeughersteller fertige Bauteile zugeliefert werden, die in der Endmontage genau passen müssen.

In der Praxis trachtet man diese Forderungen bei Fertigung in einer Fertigungsstraße dadurch zu erfüllen, dass die die Straße durchlaufenden Förderzeuge als Montagelehren ausgebildet sind oder solche tragen. Auf diesen wird dann, Station für Station, ein Teil nach dem anderen am Strukturrahmen befestigt. Bei Türen mit ihren vielen Verkleidungs- und Zubehörteilen, zum Beispiel Fensterhebern und Rückblickspiegeln, inklusive deren elektrischer Verkabelung, sind solche Fertigungsstraßen sehr lang, weshalb eine sehr große Zahl von Montagelehren im Umlauf ist.

Alle diese Montagelehren müssten genau gleich und gleich genau eingestellt sein, was sehr arbeitsintensiv und praktisch sowieso unmöglich ist. Ungenauigkeiten sind also unvermeidlich. Das führt zu zeitraubenden Einstell- und Nacharbeiten beim Einbau in das Fahrzeug. Dazu kommt bei länger anhaltender Serienfertigung, dass sich die Toleranzbereiche der einzelnen Teile und des Fahrzeugkörpers verschieben (Toleranz-Drift), was von Zeit zu Zeit ein Nachstellen der Montagelehren erforderlich machen würde. Das ist bei deren großer Anzahl noch arbeitsaufwendiger. Es wird daher erst durchgeführt, wenn die Maßabweichungen intolerabel geworden sind.

Ein Verfahren zur Montage von Fahrzeugtüren ist aus der DE 3726292 C bekannt. Diese Offenbarung bezieht sich auf ein Verfahren zur Montage von Fahrzeugtüren mit einem die tragende Struktur bildenden Türkörper, in dessen Hohlraum ein am Türkörper befestigter Aggregateträger angeordnet ist. In diesem Verfahren wird ein Türkörper an einer Lehrenplatte positioniert, indem er an Referenzlagern der Lehrenplatte angelegt und mit ihr verbunden wird, weiters werden montagerelevante Anbauteile an der Lehrenplatte mit Hilfe von Bezugslagern positioniert und fest mit dem Türkörper verbunden und die so hergestellte Einheit den weiteren Montageschritten zugeführt. An den Türkörper der DE 3726292 C wurden bereits beim Einpassen in das Fahrzeug die Scharniere und das Schlossblech positioniert und befestigt. Der Türkörper wird im Rahmen einer Vormontage in den Fahrzeugkörper eingesetzt, sodann werden Messpunkte des Türkörpers und des Fahrzeugkörpers erfasst und daraufhin der Türkörper wieder vom Fahrzeug demontiert, um anhand der Messergebnisse die Fahrzeugtür zu komplettieren. Danach erfolgt eine erneute Montage der komplettierten Fahrzeugtür.

Die DE 3726292C offenbart ebenfalls eine Vorrichtung nach dem Oberbegriff des Anspruchs 9.

Es ist somit Aufgabe der Erfindung, ein Verfahren und eine Vorrichtung zum Zusammenbau von Bauteilen der genannten Art zu schaffen, die bei möglichst niederen Fertigungskosten eine hohe Genauigkeit und Einhaltung enger Montagetoleranzen erlaubt, die auch bei anhaltender Serienproduktion aufrechterhalten wird.

Erfindungsgemäß besteht das Verfahren zum Zusammenbau einer Türe oder Klappe eines Fahrzeuges, welche für die Montage in einem Fahrzeugkörper bestimmt ist und aus einem Strukturteil, den montagerelevanten Anbauteilen, nämlich Scharnieren, dem Schloß und gegebenenfalls Fensterteilen, und weiteren Teilen besteht, in folgenden Schritten:
a) der Strukturteil wird an einer Lehrenplatte in allen drei Koordinatenrichtungen positioniert, indem er mit mindestens drei eigenen Referenzpunkten an Referenzlagern der Lehrenplatte angelegt und lösbar mit der Lehrenplatte verbunden wird,
b) alle montagerelevanten Anbauteile werden an der Lehrenplatte in allen drei Koordinatenrichtungen positioniert, indem sie an auf der Lehrenplatte angebrachte Bezugslager angelegt und festgehalten werden,
c) alle montagerelevanten Anbauteile werden in den solcherart festgelegten Positionen fest mit dem Strukturteil verbunden,
d) die so hergestellte aus dem Strukturteil und den montagerelevanten Anbauteilen bestehende Einheit wird den weiteren Montageschritten zugeführt, in denen die weiteren Teile ein- bzw. angebaut werden.

Dabei werden die Bezugslager der montagerelevanten Anbauteile anhand von in der Fertigung des Rohbaues des Fahrzeugkörpers nur an diesem aufgenommenen Daten verstellt.

Zunächst ist dreierlei wesentlich: Erstens, dass am Kopf der Zusammenbaustraße eine Arbeitsstation mit nur einer ortsfesten Lehrenplatte ist, an der die wenigen montagerelevanten Anbauteile maßgenau mit dem Strukturrahmen verbunden werden. Das braucht, vor allem bei entsprechender Ausrüstung der Lehrenplatte, nur sehr wenig Zeit, sodass die Taktzeit der nachfolgenden Montageschritte beziehungsweise Stationen, in denen die übrigen Teile montiert werden, darunter nicht leidet.

Ausserdem macht es von Fehlern des Bedienungspersonales weitgehend unabhängig. Wesentlich ist zweitens, dass nur eine einzige Lehrenplatte genau maßhaltig hergestellt und bei Verschiebung der Toleranzbereiche nachjustiert werden muß, was die Anlage- und Arbeitskosten erheblich senkt.

Verglichen mit dem Stand der Technik wird allein dadurch schon die Genauigkeit erhöht, weil die Streuung zwischen den Maßen der vielen Montagelehren wegfällt. Drittens: Alle Punkte und Lager sind mit Toleranzen behaftet; durch die Bezugnahme aller Punkte und Lager auf die Lehrenplatte sind die Toleranzketten kürzer als bei dem aus der Praxis bekannten Verfahren, und sind alle Toleranzketten ungefähr gleich lang. Ausserdem kann dadurch die Maßhaltigkeit der Bezugspunkte und der Referenzpunkte hinsichtlich der Lehrenplatte mittels einer Messvorrichtung unmittelbar überprüft werden, die mobil sein kann, um die entsprechenden Maße auch am Fahrzeug, für das die Tür bestimmt ist, abzunehmen. Dadurch ist eine weitere Fehlerquelle ausgeschaltet. Das bedeutet insgesamt, dass auch die resultierenden Toleranzen der fertigen Tür enger sind.

Im Schritt a) wird zuerst der Strukturteil an der Lehrenplatte so befestigt, dass er sich in einer genau definierten Position befindet und keinen Freiheitsgrad mehr hat. Im Schritt b) werden dann die montagerelevanten Anbauteile praktisch gleichzeitig ebenso genau positioniert, wobei je nach deren Funktion die Positionierung entweder in allen oder nur in bestimmten Richtungen und in der jeweils geeigneten Weise erfolgt. Dann werden sie fest mit dem Strukturteil verbunden (Schritt c) und die Einheit den weiteren Montageschritten zugeführt, in der die weiteren Teile ein- bzw. angebaut werden. Das kann auf der Lehrenplatte selbst oder in einer darauffolgenden Zusammenbaustraße geschehen. Im letzteren Fall werden die Einheiten auf ein Förderzeug geladen.

In einer für höchste Qualitätsansprüche besonders vorteilhaften Verfahrensführung werden die Daten jeweils an demjenigen Fahrzeug gemessen, für das die jeweilige Tür bestimmt ist und die Verstellung der Bezugslager wird selbsttätig in genau dem Ausmass vorgenommen, das in einem Rechner aus den gemessenen Daten berechnet wird (Anspruch 2). Es wird somit während der Produktion jeder Tür das tatsächliche Maß des Rohbaues des zugehörigen individuellen Fahrzeuges herangezogen. Das erfordert zumindest Gleichzeitigkeit der Fertigung von Fahrzeug-Rohbau und Tür. Die Zuordnung zwischen Fahrzeug und seinen Türen bereits im Produktionsstadium verlangt bei der heute bereits geübten Sequenzierung nach Farbe und Ausführungsvariante keinen wesentlichen Mehraufwand.

Erfindungsgemäß erfolgt weiters das Positionieren des Strukturteiles an der Lehrenplatte mittels zweier erster Referenzpunkte und erster Referenzlager in x-Richtung und z-Richtung und mittels dreier zweiter Referenzpunkte und zweiter Referenzlager in y-Richtung. Zur Festlegung in der Ebene des Bauteiles werden die minimal erforder-lichen zwei und zur Festlegung der Lage quer dazu die minimal erfor-derlichen drei Referenzpunkte herangezogen, sodass keine statischen Überbestimmtheiten entstehen, die zu Verspannungen und so auch wieder zu Ungenauigkeiten führen könnten. Als erste Referenzpunkte am Strukturteil können so bereits bei der Fertigung des Strukturrahmens verwendete Punkte, zum Beispiel Bohrungen, verwendet werden. Weiters erfolgt erfindungsgemäß das Positionieren der montagerelevanten Anbauteile an der Lehrenplatte in x-Richtung und/oder z-Richtung durch Anlegen an erste Bezugslager und in y-Richtung durch Anlegen an zweite Bezugslager. Das und die dazugehörigen Bezugslager können der Natur des jeweiligen montagerelevanten Anbauteiles angepasst werden.

Ist der montagerelevante Anbauteil ein Fensterrahmenteil oder ein Fenster, so erfolgt dessen Positionieren bezüglich der Lehrenplatte in weiterer Ausbildung der Erfindung mittels:
a) Mindestens zweier als Anschläge in x-Richtung und/oder in z-Richtung ausgebildeter erster Bezugslager, an die die Kontur des Fensters und/oder des Fensterrahmenteiles angelegt wird,
b) eines als Anschlag in y-Richtung ausgebildeten zweiten Bezugslagers, das auf der Lehrenplatte angebracht ist,
c) mindestens einer Auflage am auf der Lehrenplatte befestigten Strukturteil in y-Richtung. (Anspruch 3).

Mit Schritt a) wird die Kontur der gesamten Tür nach oben genau eingestellt, mit Schritt b) und c) die Einwärts-Neigung der Fensterfläche bezüglich der Türfläche. Bei Schritt c) ist noch die Besonderheit, dass die Festlegung bezüglich der Lehrenplatte nur indirekt über den Strukturteil erfolgt, was für die Abdichtung und die spätere Montage weiterer Teile günstig ist. Bei Fenstern bzw. deren Rahmen ist die Positionierung besonders kritisch, weil dabei genaues Passen an der fahrzeugfesten Türdichtung und damit die Wasserdichtheit des Fahrzeuges auf dem Spiel steht. Handelt es sich um ein Hebefenster, so wird dieses mit seinem Hebemechanismus in derselben Weise eingebaut. Ist das Hebefenster rahmenlos, ist weiters eine Lehre oder ein Anschlag für dessen obere Endstellung vorzusehen.

Eine Weiterentwicklung des Schrittes c) besteht darin, dass am Strukturteil zwei Auflagen für die Positionierung in y-Richtung vorgesehen sind, an deren erster der Fensterrahmenteil direkt an den Strukturteil angelegt wird, und an deren zweiter der Fensterrahmenteil unter Zwischenlage eines Einlegeteiles an den Strukturteil angelegt wird, wobei an beiden Auflagen ein Befestigungselement vorgesehen ist (Anspruch 4). Die Stelle mit der direkten Anlage erlaubt die feste Verbindung des Rahmens mit dem Strukturteil durch Verschrauben, der Einlegeteil die Einstellung der Neigung und damit des Anpressdruckes des Rahmens beziehungsweise der Scheibe an der Türdichtung. Als Einlegeteil können Plättchen wählbarer Dicke eingesetzt werden (Anspruch 5). Es kann aber auch ein Keil insbesondere ein abgestufter oder aufgerauhter Keil sein, der durch eine weitere Verschraubung zwischen Rahmen und Strukturteil festgehalten wird. Insgesamt kann so die Neigung und der Auflagerdruck an der Türdichtung eingestellt werden.

Ist der montagerelevante Anbauteil ein Schlossblech beziehungsweise ein Teil des Schlosses, erfolgt dessen Positionieren bezüglich der Lehrenplatte mittels:
a) Mindestens zweier als Anschläge in x-Richtung und/oder in z-Richtung ausgebildeter erster Bezugslager, an die das Schlossblech beziehungsweise ein Teil des Schlosses angelegt wird,
b) eines als Anschlag in y-Richtung ausgebildeten zweiten Bezugslagers, das flächig ausgebildet und auf der Lehrenplatte angebracht ist, (Anspruch 6).

Mit a) wird wieder die Position in der Ebene der Tür festgelegt, die flächige Ausbildung gemäß b) trägt der kleinen Erstreckung von Schlossblech oder Schloss in dieser Ebene Rechnung, die Fläche entspricht einer Festlegung von drei Bezugspunkten in y-Richtung.

Sind die montagerelevanten Anbauteile aus einem fahrzeugfesten Teil und aus einem türfesten Teil bestehende Scharniere, erfolgt deren Positionieren an der Lehrenplatte in y-Richtung durch Einlegen des jeweils fahrzeugfesten Scharnierteiles in ein erstes Bezugslager und Festlegen des türfesten Scharnierteiles bezüglich des fahrzeugfesten Scharnierteiles mittels einer Lehre (Anspruch 7). Die besonders schwierige Festlegung der Scharniere, die in sich bewegliche Teile sind, in y-Richtung ist auf diese Weise überraschend einfach erreicht. Dadurch ist sichergestellt, dass die Aussenkontur der am Fahrzeug montierten Tür mit der Aussenkontur der Fahrzeuges genau bündig ist.

Eine weitere Schwierigkeit bei der Festlegung der Scharniere bereitet die Tatsache, dass diese sowohl an der Tür, als auch am Fahrzeugkörper passen müssen. In Weiterbildung des Erfindungsgedankens wird das dadurch erreicht, dass zum Positionieren der Scharniere die ersten Bezugslager in x-Richtung verschiebbar sind, und dass der fahrzeugfeste Scharnierteil sich in x-Richtung erstreckende Langlöcher für die spätere Befestigung am Fahrzeug aufweist (Anspruch 8). Damit bleibt der Tür bei der Montage am Fahrzeug noch ein Freiheitsgrad, eine geringfügige Verstellbarkeit in ihrer Ebene (der xz-Ebene), mit der eine rundum gleich breite Türfuge und gegebenenfalls ein genau eingreifendes Türschloss erreicht wird.

Die Erfindung besteht auch in einer besonderen Vorrichtung zum Zusammenbau einer aus einem Strukturteil, montagerelevanten Anbauteilen, nämlich Scharnieren, dem Schloß und gegebenenfalls Fensterteilen, und weiteren Teilen bestehenden Türe oder Klappe eines Fahrzeuges, die als ortsfeste Lehrenplatte ausgebildet ist. Diese Vorrichtung weist einerseits Referenzlager zur Festlegung des Strukturteiles in allen drei Koordinatenrichtungen, und andererseits verstellbare Bezugslager zur Festlegung der montagerelevanten Anbauteile auf, wobei Bezugslager für alle montagerelevanten Anbauteile vorgesehen sind und deren Verstellung anhand von in der Fertigung des Rohbaues des Fahrzeugkörpers nur an diesem aufgenommenen Daten erfolgt (Anspruch 9). Dadurch, dass die Referenzlager und auch die Bezugslager an der Lehrenplatte festgelegt sind, sind die Toleranzketten kürzer und ungefähr gleich lang. Das bedeutet, dass auch die resultierenden Toleranzen der fertigen Tür enger sind. Die Verstellbarkeit der Bezugslager erleichtert den Aufbau der Arbeitsstation vor Produktionsbeginn und dient später der Korrektur zur Anpassung an sich im Laufe der Produktion der Teile und des Fahrzeuges verschiebenden Toleranzfeldern (Toleranz-Drift).

Die Verstellung der Bezugslager kann in Weiterbildung der Erfindung auch mittels ferngesteuerter Antriebseinrichtungen erfolgen. Dadurch kann die Toleranz-Drift gänzlich ausgeschaltet werden, wenn die Daten jeweils an demjenigen Fahrzeug gemessen werden, für das die jeweilige Tür bestimmt ist und die Verstellung der Bezugslager selbsttätig in genau dem Ausmass vorgenommen wird, das in einem Rechner aus den gemessenen Daten berechnet wird.

In einer besonders vorteilhaften erfindungsgemäßen Ausführungsform bezüglich der Positionierung des Strukturteiles sind die ersten Referenzlager zur Festlegung in x-Richtung und/oder z-Richtung Dorne, die in als Bohrungen ausgebildete Referenzpunkte des Strukturteiles eingreifen und sind die zweiten Referenzlager zur Festlegung in y-Richtung als Auflager mit Spannvorrichtungen zum Festspannen des Strukturteiles ausgebildet. Die Dorne und Bohrungen sichern eine Positionierung mit besonders enger Toleranz. Die Positionierung ist besonders genau, wenn zwei erste Referenzlager und drei zweite Referenzlager jeweils in möglichst großer Entfernung voneinander angeordnet sind. Die Verwendung der zweiten Referenzlager auch als Spannvorrichtung bringt eine Vereinfachung der Lehrenplatte und eine schnelle Bedienung, die kurzen Taktzeiten zugute kommt. Bei von einer Leitstelle automatisch gesteuerten Spannvorrichtungen kann sichergestellt werden, dass der Strukturteil satt am Referenzlager aufliegt und erst wieder freigegeben wird, wenn gewisse, der Leitstelle gemeldete Handlungen vorgenommen wurden. Das macht von der Sorgfalt des Bedienungpersonales unabhängig und verbessert die Qualität weiter.

Die verschiedenen Bezugslager können je nach den Erfordernissen des jeweiligen montagerelevanten Anbauteiles sehr verschieden ausgebildet sein. Im Rahmen der Erfindung gibt es verschiedene Ausführungsformen mit besonderen Vorteilen.

Eine solche Ausführungsform besteht darin, dass die verstellbaren Bezugslager an der Lehrenplatte für die Festlegung der montagerelevanten Anbauteile jeweils eine Verstellkonsole aufweisen, die aus so vielen durch Zwischenlegen von Einstellplättchen verstellbaren Teilkörpern bestehen, als Verstellrichtungen vorgesehen sind, wobei die Einstellplättchen jeweils in einer Ebene normal zur Verstellrichtung angeordnet und die anliegenden Kontaktebenen der Teilkörper von Schraubbolzen durchsetzt sind (Anspruch 10). Dieser prinzipielle Aufbau der Verstellkonsolen erlaubt die Einstellung in einer Koordinatenrichtung, ohne die Einstellung in den anderen Richtungen zu beeinträchtigen. Die Einstellplättchen werden entsprechend dem erforderlichen Korrekturmaß zwischen den Kontaktebenen gestapelt. Weil die Einstellplättchen direkt von den Schraubbolzen durchsetzt und von diesen zusammengespannt sind, ist die Verstellung genau und reproduzierbar. Sie können ohne die Schrauben ganz herauszuschrauben eingeführt werden, wenn sie zu ihrer Aussenkontur hin offene Ausnehmungen für den Durchtritt der Schraubbolzen aufweisen (Anspruch 11).

In einer bevorzugten Ausführungsform eines in einer ersten Richtung und in einer zweiten Richtung verstellbaren Bezugslagers, besteht dessen Verstellkonsole aus einem auf der Lehrenplatte angeschraubten Basiskörper mit einer ersten Kontaktebene, einem Zwischenkörper mit einer zweiten und einer dritten Kontaktebene und einem Lagerkörper mit einer vierten Kontaktebene, wobei die erste und zweite Kontaktebene normal zur ersten Richtung und die dritte und vierte Kontaktebene normal zur zweiten Richtung sind und wobei zwischen der ersten und der zweiten Kontaktebene sowie zwischen der dritten und der vierten Kontaktebene jeweils Einstellplättchen eingelegt sind (Anspruch 12).

Eine besondere Ausführungsform zur Festlegung der aus einem fahrzeugfesten und aus einem türfesten Teil bestehenden Scharniere besteht darin, dass das Bezugslager den fahrzeugfesten Teil des Scharnieres aufnimmt und mit diesem in x-Richtung verschiebbar ist, dass das Bezugslager in y-Richtung und z-Richtung einstellbar und an ihm eine Lehre angeordnet ist, die den türfesten Teil des Scharnieres in y-Richtung positioniert (Anspruch 13). Die Verschiebung des Bezugslagers dient dem Anlegen des türfesten Teiles an die Stirnkante der Tür, das für die Schraubverbindung nötig ist. Maßabweichungen in x-Richtung können durch Langlöcher am fahrzeugfesten Teil aufgefangen werden. Die Lehre für den türfesten Teil des Scharnieres bestimmt, mit anderen Worten, dessen Schwenkstellung.

Wenn der türfeste Teil des Scharnieres mindestens zwei Bohrungen für die Schrauben zu dessen Verbindung mit der Tür aufweist, besteht eine vorteilhafte Ausbildung der Lehre darin, dass die Lehre eine Führung aufweist, mit der sie im Bezugslager in x-Richtung verschiebbar geführt ist und einen Lehrdorn besitzt, der zur Positionierung des türfesten Teiles des Scharnieres in eine der Bohrungen einführbar ist (Anspruch 14). Auf diese Weise sind die fertigungsbedingt großen Toleranzen des Scharnieres, der meist aus Gussteilen mit großen Oberflächentoleranzen besteht, direkt an den Anschlußstellen an die Tür überbrückt und der Scharnier wird in der genau richtigen Stellung sogleich mit der Tür verbunden. Zur Positionierung in y-Richtung genügt das Eingreifen des Lehrdornes in eine Bohrung, in die andere(n) Bohrung(en) können bereits die Schrauben eingedreht werden, um den Scharnier in der eingestellten Position festzumachen. Zur Korrektur kann der Passfinger bezüglich der Führung in y-Richtung verstellbar sein (Anspruch 15).

Schließlich liegt es im Rahmen der Erfindung, auf zumindest einem der Bezugslager Sensoren anzubringen, die ein Signal, vorzugsweise ein Positionssignal, an eine Leitstelle abgeben (Anspruch 16) und/oder auf zumindest einem der zweiten Referenzlager Sensoren anzubringen, die ein dem ordnungsgemäßen Spannen der Spannvorrichtungen entsprechendes Signal an eine Leitstelle abgeben (Anspruch 17). Das erlaubt bei automatisierter Fertigung die Kontrolle, ob die Positionierung genau erfolgte, und ob der Strukturrahmen auch satt auf den Auflagen aufliegt und festgespannt ist.

Im folgenden wird die Erfindung anhand von Abbildungen eines Ausführungsbeispieles beschrieben und erläutert. Es stellen dar:
- Fig. 1:: Eine schematische Draufsicht auf die Lehrenplatte mit dem Strukturteil einer Tür,
- Fig. 2:: Eine schematische Draufsicht auf die Lehrenplatte mit den montagerelevanten Anbauteilen
- Fig. 3:: Detail II in Fig. 1,
- Fig. 4:: Schnitt III-III in Fig. 2,
- Fig. 5:: Detail VI in Fig. 2,
- Fig. 6:: Schnitt nach VI-VI in Fig. 5,
- Fig. 7:: Ein Detail zum erfindungsgemäßen Verfahren

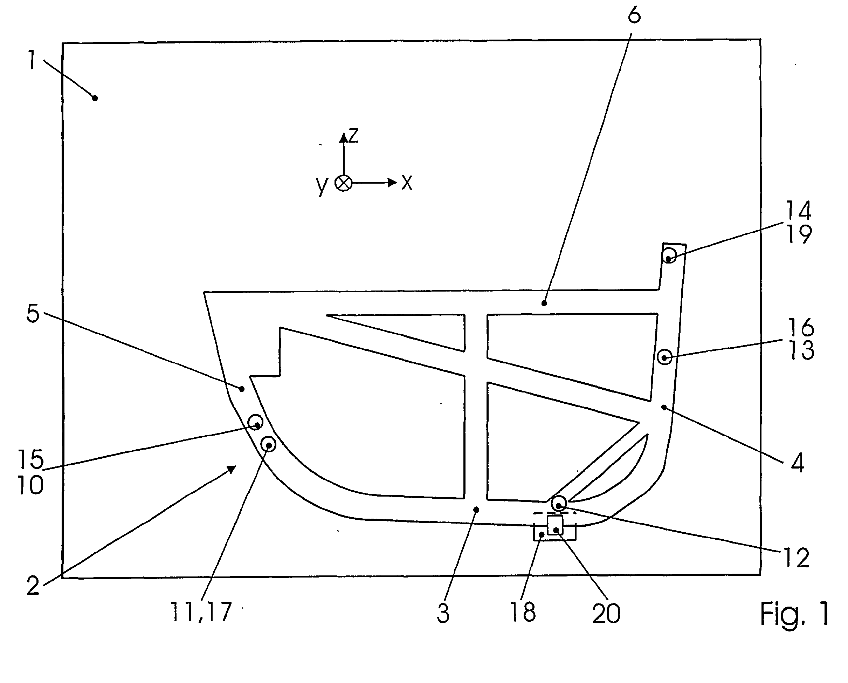

In Fig. 1 ist eine Lehrenplatte 1 nur mit ihrer Aussenkontur dargestellt und ein Koordinatensystem x,y,z angedeutet, bei dem die x-Richtung der Längsrichtung eines Kraftfahrzeuges, die y-Richtung der Querrichtung, und die z-Richtung der Vertikalrichtung entspricht. Die Lehrenplatte 1 spannt hier somit eine Ebene parallel zur xz-Ebene, entsprechend einer Seitentür eines Kraftfahrzeuges, auf. Im Falle einer Hecktür spannt die Lehrenplatte 1 eine Ebene parallel zur yz-Ebene auf.

Weiters ist in Fig. 1 ein Strukturteil 2 der Tür eines Kraftfahrzeuges dargestellt. Der Strukturteil 2 kann beliebig ausgeführt sein, er kann etwa aus zusammengeschweißten Profilen oder Rohren oder aus verbundenen Blechschalen bestehen, jedenfalls ist er der Teil, der der Tür ihre Festigkeit verleiht. Da es sich hier um die Seitentür eines Kraftfahrzeuges handelt, erstreckt sich der Strukturteil 2 im wesentlichen in der xz-Ebene. Er besteht hier aus einem Untergurt 3, der einen vorderen aufsteigenden Ast 4 und einen hinteren aufsteigenden Ast 5 aufweist, welche Äste mit einem Obergurt 6 verbunden sind.

Der Strukturteil 2 besitzt erste Referenzpunkte 10, 13, mittels derer der Strukturteil 2 in der xz-Ebene positioniert ist. Sie sind als Bohrungen ausgebildet, in die entsprechende erste auf der Lehrenplatte 1 befestigte Referenzlager 15,16 eingreifen. Die Referenzlager sind Dome, die nach den Regeln der Messtechnik so ausgebildet sind, dass im Referenzlager 16 die Festlegung in x- und in z-Richtung erfolgt und im Referenzlager nur in z-Richtung.

Für die Festlegung des Strukturteile in y-Richtung sind auf der Lehrenplatte zweite Bezugslager 17,18,19 befestigt, an die der Strukturteil mit seinen zweiten Referenzpunkten 11,12,14 angelegt und mittels Spannvorrichtungen 20 niedergespannt wird. Bei Festlegung in y-Richtung müssen die zweiten Referenzpunkte 11,12,14 naturgemäß nicht genau definiert sein. Die Bezugslager 15 bis 19 können in Bezug auf die Lehrenplatte 1 fest sein. Da Bezugslager und Lehrenplatte aber eine einzeln zusammengebaute Lehre sind, können die Bezugslager ohne Mehrauf wand auch verstellbar ausgeführt sein.

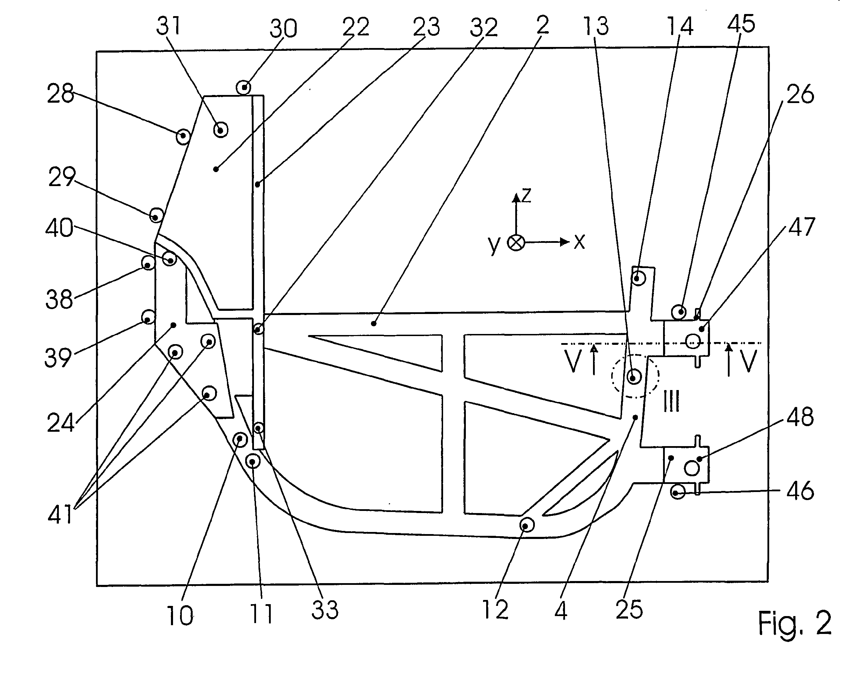

Fig. 2 zeigt dieselbe Lehrenplatte 1 mit dem bereits aufgespannten Strukturteil 2 und zusätzlich die montagerelevanten Anbauteile und deren Positionierung auf der Lehrenplatte. Die montagerelevanten Anbauteile sind hier ein Fenster 22 mit Rahmenstrebe 23, ein Schloßblech 24, und ein unteres und ein oberes Scharnier 25,26. Diese werden an der Lehrenplatte 1 in allen drei Koordinatenrichtungen positioniert und in der solcherart festgelegten Position fest mit dem Strukturteil verbunden. Deren Bezugslager auf der Lehrenplatte sind verstellbar, wobei deren Verstellung anhand von in der Fertigung aufgenommenen Daten erfolgt.

In dem in Fig. 2 dargestellten Ausführungsbeispiel ist ein festes Fenster 22 nur im hinteren Teil der Tür angeordnet und mit seiner Rahmenstrebe 23 am Strukturteil 2 zu befestigen. In anderen Ausführungsformen würde anstelle des festen Fensters ein fester Fensterrahmen treten, in dem eine absenkbare Fensterscheibe geführt ist. Es könnte auch ein rahmenloses Hubfenster sein, dann wird mit der aus Fenster und Hubwerk bestehenden Baugruppe wie mit einem Fensterrahmen verfahren. Unter dem Fenster 22 ist ein Schloßblech 24 zur Aufnahme des nicht dargestellten Türschlosses angebracht, es könnte sich aber auch um das Türschloss selbst oder um einen Teil dessen handeln. Am vorderen Ast 4 des Strukturteiles 2 ist ein unterer Scharnier 25 und ein oberer Scharnier 26 vorgesehen.

Das Fenster 22 wird vor der festen Verbindung mit dem Strukturteil 2 auf der Lehrenplatte 1 wie folgt positioniert: Erste Bezugslager 28, 29 in x-Richtung und 30 in z-Richtung sind als Finger ausgebildet, an die die Kontur des Fensters 22 angelegt wird. An dieser liegen die jeweiligen Bezugspunkte. Ein zweites Bezugslager 31 zur Positionierung in y-Richtung ist als Anschlag ausgebildet. Zur Positionierung in y-Richtung ist ein weiteres Lager 32 direkt auf dem Strukturteil 2 vorgesehen, um ein genaues Passen der in der späteren Fertigung montierten Verldeidungsteile sicherzustellen. An diesem weiteren Lager 32 wird auch eine nicht dargestellte Verbindungsschraube eingedreht. Um die richtige Neigung des Fensters 22 sicherzustellen, wird das Fenster an das zweite Bezugslager 31 angelegt und am unteren Ende der Rahmenstrebe 23 ein Einlegeteil 33 entsprechender Dicke eingelegt und festgemacht.

Für das Schloßblech 24 sind in ähnlicher Weise erste Bezugslager 38, 39 in x-Richtung sowie 40 in z-Richtung vorgesehen und als sich in y-Richtung erstreckende Finger ausgebildet. Für die Positionierung in y-Richtung ist ein zweites Bezugslager 41 vorgesehen, das hier flächig so ausgebildet ist, dass sich drei Auflagerpunkte ergeben, das Schloßblech somit auch in seiner Winkellage fixiert ist. Die entsprechenden Bezugspunkte auf dem Schloßblech 24 ergeben sich wieder von selbst.

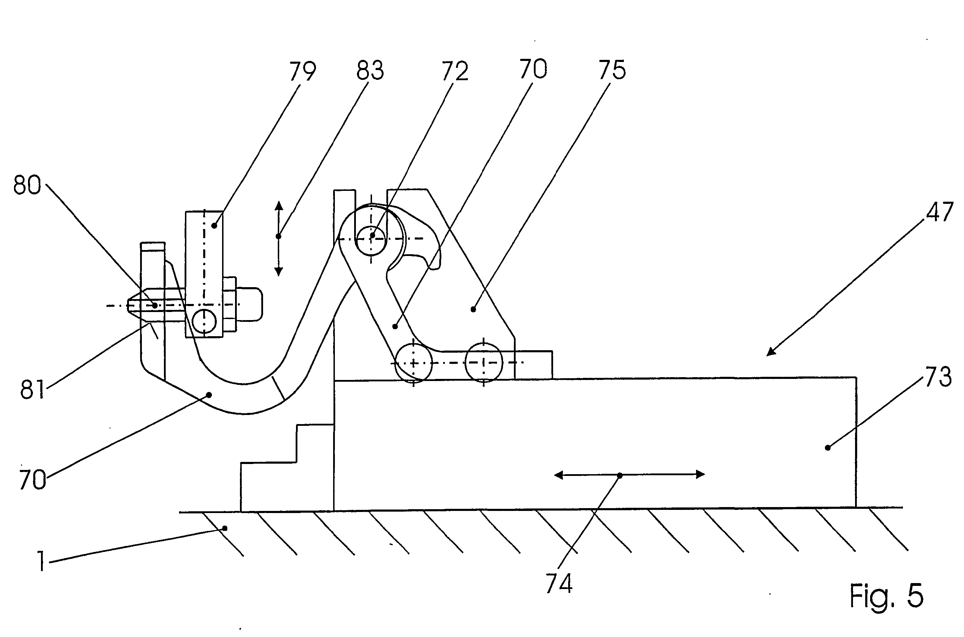

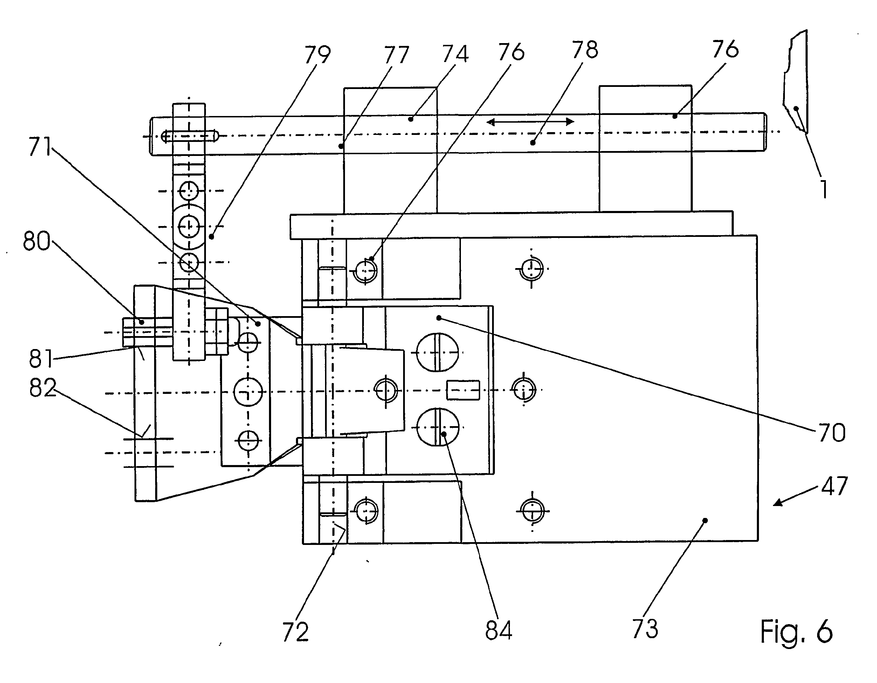

Für die Positionierung der Scharniere 25, 26 sind zur Festlegung in z-Richtung erste Bezugslager 45, 46 und zur Festlegung in y-Richtung zweite Bezugslager 47, 48 vorgesehen. Diese zweiten Bezugslager 47, 48 für die Scharniere 25, 26 können mit den ersten Bezugslager 45, 46 vereint sein und weisen einige Besonderheiten auf, auf die bei der Beschreibung der Fig. 5 und 6 näher eingegangen wird.

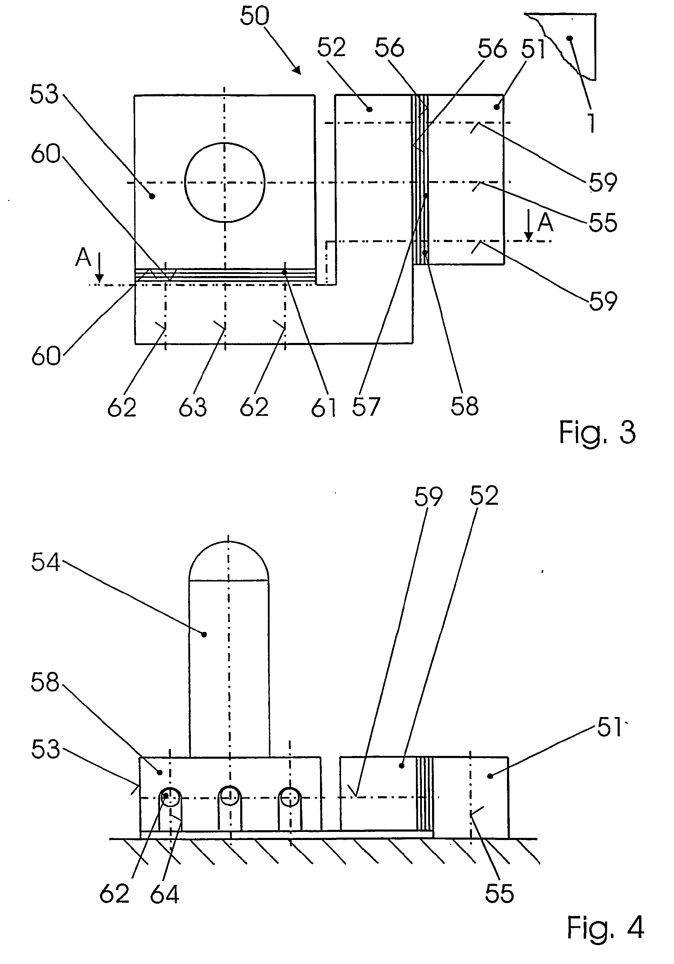

In Figs. 3,4 ist im Detail die Ausführung des Bezugslagers 13 dargestellt, um in allgemeinster Form die Verstellbarkeit der ersten Referenzlager und vor allem der Bezugslager darzutun. Eine exemplarische Verstellkonsole 50 besteht aus einem ersten Teilkörper 51, hier einem auf der Lehrenplatte 1 fest sitzenden Block, einem zweiten Teilkörper 52, hier einen Winkelblock, und einem dritten Teilkörper 53, auf dem ein Finger oder Anschlag 54 angebracht ist. Der erste Teilkörper 51 und der zweite Teilkörper 52 haben erste Kontaktebenen 56, zwischen denen ein Stapel 57 von kalibrierten Einstellplättchen 58 eingelegt ist, und die mittels Passtiften 59 zueinander positioniert und mittels einer Schraube 55 miteinander verbunden sind, wobei die zur Einstellung nötigen Einstellplättchen 58 festgespannt werden. Die zweiten und dritten Teilkörper 52, 53 haben zweite im rechten Winkel zu den ersten Kontaktebenen 56 angeordnete Kontaktebenen 60, zwischen denen ein zweiter Stapel 61 von Einstellplättchen 58 eingelegt ist. Diese sind mittels Passstiften 62 zueinander positioniert und mittels der Schraube 63 zusammengehalten.

Die Einstellplättchen 58 haben zu ihrer Außenkontur hin offene Ausnehmungen 64, die ein Einzufügen oder Wegnehmen von Plättchen geeigneten Dickemnaßes ohne gänzliches Lösen der jeweiligen Schraube ermöglichen. Wesentlicher Vorteil dieses Aufbaues ist, dass die Verstellung in einer Richtung vorgenommen werden kann, ohne die in einer anderen zu beeinträchtigen. Wenn 54 ein Finger ist, der der Positionierung in der xz-Ebene dient, so kann er fest mit dem dritten Teilkörper verbunden sein; bildet er einen Anschlag in y-Richtung, so kann er mittels weiterer nicht dargestellter Beilagscheiben oder Einstellplättchen auch in y-Richtung verstellt werden.

Figs. 5,6 zeigen die besondere Gestaltung des zweiten Bezugslagers 47 für die Positionierung der Scharniere 25, 26. Die Besonderheit ergibt sich daraus, dass der Scharnier 26 aus einem fahrzeugfesten Teil 70, einem türfesten Teil 71 und einer Schwenkachse 72 zwischen den beiden Teilen besteht. Der fahrzeugfeste Teil 70 wird später beim Einbau der Tür mit dem Fahrzeugkörper verbunden. Der türfeste Teil 71 hat, um einen ausreichenden Öffnungswinkel der Tür zu gewährleisten die Form eines Schwanenhalses und ist ein Gussteil. Das zweite Bezugslager 47 weist einen gegenüber der Lehrenplatte 1 in x-Richtung (Pfeil 74) verschiebbaren Lagerblock 73 auf, mit einer Aufnahme 74 für den fahrzeugfesten Teil 70 und der Scharnierachse 72 des Scharniers 26. In dem Lagerblock 73 sind diese in y-Richtung und in z-Richtung positioniert. Der fahrzeugfeste Teil 70 des Scharnieres besitzt zum späteren Verbinden mit dem Fahrzeugkörper und Einpassen Schraubenlöcher 84, die als Langlöcher ausgebildet sind.

Der türfeste Teil 71 des Scharnieres 26 muss wegen der Gelenkigkeit des Scharnieres getrennt so positioniert werden, dass er in y-Richtung und auch im Winkel sauber an die entsprechende Stirnkante der Tür anschließt. Dazu sind am Lagerblock 70 Führungsblöcke 76 für eine in x-Richtung verschiebbare (Pfeil 78) Führungsstange 77 vorgesehen, die über ein in y-Richtung auf im Detail nicht dargestellte Weise verstellbares Verbindungsglied 79 einen Lehrdorn 80 trägt. Zur Positionierung des türfesten Teiles 71 wird der Lehrdorn 80 in ein erstes Schraubloch 81 des türfesten Teiles 71 eingeführt und dann in ein zweites Schraubloch 82 eine Verbindungsschraube zur Befestigung des Scharnieres 26 an der Tür eingeschraubt. Der fahrzeugfeste Teil 70 des Scharnieres besitzt zum späteren Verbinden mit dem Fahrzeugkörper und Einpassen Schraubenlöcher 84, die als Langlöcher ausgebildet sind.

Auf der beschriebenen, aus Lehrenplatte und den daran verstellbar befestigten Lagern bestehenden Vorrichtung wird zuerst der Strukturrahmen 2 positioniert und dann die montagerelevanten Anbauteile. Die Positionierung insbesondere der Letzteren wird durch Rückmeldung von in der Fertigung stromabwärts liegenden Kontrollstellen immer wieder so korrigiert, dass die Paßgenauigkeit der Tür bei ihrer Montage im Fahrzeugkörper hoch bleibt. Bei entsprechender Automatisierung durch automatische Klemmung und Positionskontrolle durch Sensoren, kann dieser Arbeitsschritt in einer Arbeitsstation auf einer Lehrenplatte sehr schnell durchgeführt werden. Dann wird die so entstandene Einheit den weiteren Montageschritten zugeführt, in denen dann der Fensterhebermechanismus, die Elektrik, weitere Zubehörteile und schließlich Aussenhaut und Verkleidungsteile montiert werden.

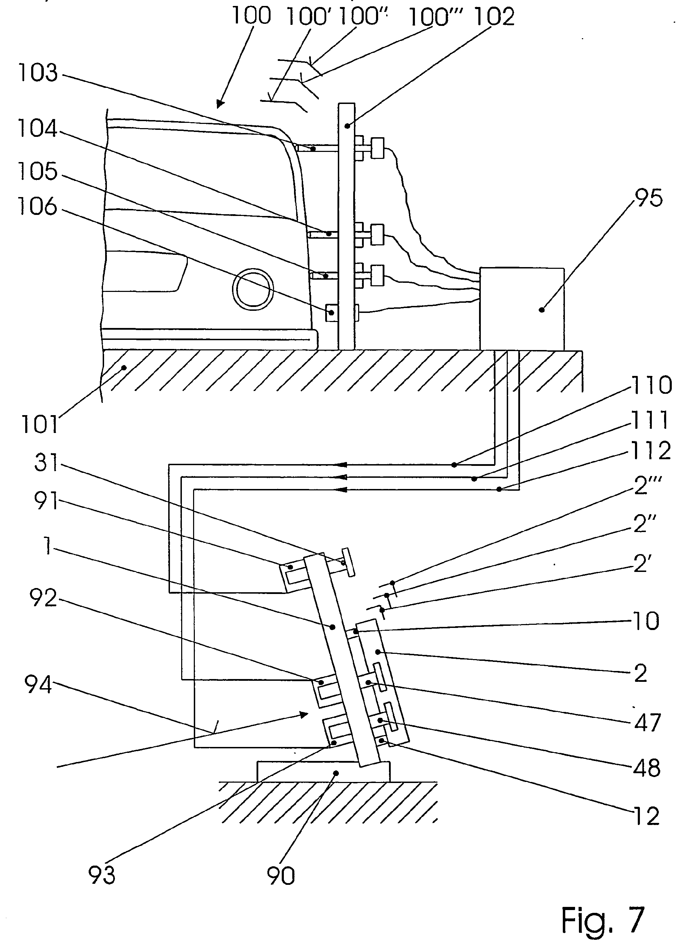

**Fig. 7** zeigt schematisch eine besondere Weiterbildung des erfindungsgemäßen Verfahrens. Im unteren Bildteil ist die aus dem vorhergehenden bekannte Vorrichtung zum Zusammenbau der Tür in x-Richtung betrachtet dargestellt. Sie besteht aus der Lehrenplatte 1 mit einem Fuß 90, den Referenzpunkten 10,12 für den Strukturteil 2 der Tür, und den Bezugslagern 31,47,48 für montagerelevante Anbauteile. Hier sind nur einige Referenzpunkte und Bezugslager in y-Richtung als Beispiel eingezeichnet, um die Verstellung der Bezugslager in y-Richtung zu verdeutlichen. Dazu sind an den Bezugslagern 31,47,48 ferngesteuerte Antriebsvorrichtungen 91,92,93 vorgesehen, die diese in y-Richtung (Pfeil 94) verstellen. Auf deren Bauart ist nicht einzugehen, sie können beispielsweise von elektrischen Schrittmotoren angetriebene Schraubspindeln sein. Jedenfalls erlauben sie eine genaue und eichbare beziehungsweise reproduzierbare Verstellung in y-Richtung. Die in Fig. 2 eingezeichneten Bezugslager in x- und z-Richtung, alle oder nur einzelne davon, sind ebenso ausgestattet. Angesteuert werden diese Antriebsvorrichtungen 91,92,93 von einer Steuervorrichtung 95, einem Rechner oder Computer.

Im oberen Bildteil ist der Rohbau des Fahrzeuges 100 zu sehen, für das die gerade im unteren Bildteil im Zusammenbau begriffene Tür bestimmt ist. Das Fahrzeug ruht positionsgenau auf einer Unterlage 101, auf der ein Messgestell 102 steht. Auf diesem ist beispielsweise zumindest ein Messtaster von der bei Präzisionsmessvorrichtungen üblichen Art angebracht. Ein Messtaster genügt, wenn er in allen drei Koordinatenrichtungen beweglich ist. Hier sind drei in y-Richtung verschiebbare Messtaster 103,104,105 dargestellt, die gerade die den Bezugslagern 31,47,48 der Lehrenplatte entsprechenden Stellen am Fahrzeug 100 beziehungsweise dessen Kontur abtasten. Im Allgemeinen werden sie die Lage dieser entsprechenden Stellen in allen drei Koordinatenrichtungen abtasten. Die Messung kann aber auch auf optischem Wege, etwa mittels eines Lasers, vorgenommen werden. Die so oder so aufgenommenen Messwerte werden in der Steuervorrichtung 95 in SollStellungen der verstellbaren Bezugslager 31, 47,48 umgerechnet. Diese Sollstellungen werden über Signalleitungen 110,111, 112 den entsprechenden Antriebsvorrichtungen 91,92,93 mitgeteilt. Weiters ist am Messgestell 102 ein Leser 106 zur Identifikation des jeweiligen individiuellen Fahrzeuges angebracht. Zugleich mit den Sollstellungssignalen kann auch die Identität des jeweiligen Fahrzeuges zur Zusammenbaustation der Tür gemeldet werden, um auch diese entsprechend zu kennzeichnen.

Die Signalleitungen 110,111,112 sind unterbrochen dargestellt, da sie und die Steuervorrichtung 95 sehr verschieden disponiert und das Fahrzeug 100 und die gerade montiert Tür an weit voneinander entfernten Orten entstehen können, auch zu verschiedenen Zeitpunkten, wenn nur das Fahrzeug einen zeitlichen Vorsprung hat und in der Steuervorrichtung 95 ein Gedächtnis vorgesehen ist. Die Steuervorrichtung kann auch auf die beiden Standorte aufgeteilt sein. Etwa die Messwertverarbeitung am Ort des Fahrzeuges, die Umrechnung in Sollstellungssignale am Ort des Zusammenbaues der Tür, und das Gedächtnis hier oder dort. Die Sequenzierung ist für das Fahrzeug durch die Linien 100', 100", 100"', die weitere nachfolgende Fahrzeuge darstellen sollen, und für die Türen mit den Linien 2', 2" und 2'", die weitere nachfolgende Türen darstellen sollen, angedeutet. Das Verfahren besteht dann darin, dass vor Beginn des Zusammenbaues einer jeden Tür die Bezugslager 31,47,48 entsprechend dem individualisierten Fahrzeug so eingestellt sind, dass die fertige Tür vollkommen in dieses passt.

Wenn auch bis hier immer nur von einer Tür die Rede war, versteht es sich von selbst, dass die Erfindung für alle Türen eines Fahrzeuges, zwei, oder vier, und auch für eine gegebenenfalls vorgesehene Heckklappe anwendbar ist.

## Patentansprüche

1. Verfahren zum Zusammenbau einer Türe oder Klappe eines Fahrzeuges, welche für die Montage in einem Fahrzeugkörper bestimmt ist und aus einem Strukturteil, den montagerelevanten Anbauteilen, nämlich Scharnieren (25,26), dem Schloß (24) und gegebenenfalls Fensterteilen (22, 23), und weiteren Teilen besteht, in folgenden Schritten:
a) Der Strukturteil (2) wird an einer Lehrenplatte (1) in allen drei Koordinatenrichtungen positioniert, indem er mit mindestens drei eigenen Referenzpunkten (10 bis 14) an Referenzlagern (15 bis 19) der Lehrenplatte angelegt und lösbar mit ihr verbunden wird,
b) alle montagerelevanten Anbauteile (22 bis 26) werden an der Lehrenplatte (1) in allen drei Koordinatenrichtungen positioniert, indem sie an auf der Lehrenplatte angebrachte Bezugslager (28 bis 31; 38 bis 41; 45 bis 48) angelegt und festgehalten werden,
c) alle montagerelevanten Anbauteile (22 bis 26) werden in den solcherart festgelegten Positionen fest mit dem Strukturteil (2) verbunden,
d) die so hergestellte aus dem Strukturteil und den montagerelevanten Anbauteilen bestehende Einheit wird den weiteren Montageschritten zugeführt, in denen die weiteren Teile ein- bzw. angebaut werden , wobei die Bezugslager (28 bis 31; 38 bis 41; 45 bis 48) der montagerelevanten Anbauteile (22 bis 26) anhand von in der Fertigung des Rohbaues des Fahrzeugkörpers (100) nur an diesem aufgenommenen Daten verstellt werden.

2. Verfahren nach Anspruch 1, **dadurch gekennzeichnet, dass** die Daten jeweils an dem Fahrzeugkörper (100) gemessen werden, für den die jeweilige Tür bestimmt ist und die Verstellung des mindestens einen Bezugslagers (28 bis 31; 38 bis 41; 45 bis 48) selbsttätig in einem Ausmass vorgenommen wird, das in einem Rechner (95) aus den gemessenen Daten berechnet wird.

3. Verfahren nach Anspruch 1, wobei der montagerelevante Anbauteil ein Fensterrahmenteil (23) oder ein Fenster (22) ist, **dadurch gekennzeichnet, dass** dessen Positionieren bezüglich der Lehrenplatte (1) erfolgt mittels:
a) Mindestens zweier als Anschläge in x-Richtung und/oder in z-Richtung ausgebildeter erster Bezugslager (28,29,30), an die die Kontur des Fensters (22) und/oder des Fensterrahmenteiles (23) angelegt wird,
b) eines als Anschlag in y-Richtung ausgebildeten zweiten Bezugslagers (31), das auf der Lehrenplatte (1) angebracht ist,
c) mindestens einer Auflage (32) am auf der Lehrenplatte (1) befestigten Strukturteil (2) in y-Richtung.

4. Verfahren nach Anspruch 3, **dadurch gekennzeichnet, dass** am Strukturteil (2) zwei Auflagen (32,33) für die Positionierung in y-Richtung vorgesehen sind, an deren erster (32) der Fensterrahmenteil (23) direkt an den Strukturteil (2) angelegt wird, und an deren zweiter der Fensterrahmenteil unter Zwischenlage eines Einlegeteiles (33') an den Strukturteil angelegt wird, wobei an beiden Auflagen ein Befestigungselement vorgesehen ist.

5. Verfahren nach Anspruch 4, **dadurch gekennzeichnet, dass** als Einlegeteil (33') Plättchen wählbarer Dicke eingesetzt werden.

6. Verfahren nach Anspruch 3, wobei der montagerelevante Anbauteil das Schlossblech (24) beziehungsweise ein Teil des Schlosses ist, **dadurch gekennzeichnet, dass** dessen Positionieren bezüglich der Lehrenplatte erfolgt mittels:
a) Mindestens zweier als Anschläge in x-Richtung und/oder in z-Richtung ausgebildeter erster Bezugslager (38,39,40), an die das Schlossblech (24) beziehungsweise ein Teil des Schlosses angelegt wird,
b) eines als Anschlag in y-Richtung ausgebildeten zweiten Bezugslagers (41), das flächig ausgebildet und auf der Lehrenplatte (1) angebracht ist.

7. Verfahren nach Anspruch 3, wobei die montagerelevanten Anbauteile aus einem fahrzeugfesten Teil (70) und aus einem türfesten Teil (71) bestehende Scharniere (25,26) sind, **dadurch gekennzeichnet, dass** deren Positionieren an der Lehrenplatte in y-Richtung durch Einlegen des jeweils fahrzeugfesten Scharnierteiles (70) in ein erstes Bezugslager (45,46) und Festlegen des türfesten Scharnierteiles (71) bezüglich des fahrzeugfesten Scharnierteiles (70) mittels einer Lehre (76 bis 80) erfolgt.

8. Verfahren nach Anspruch 7, **dadurch gekennzeichnet, dass** zum Positionieren der Scharniere (25; 26) die ersten Bezugslager (45; 46) in x-Richtung verschiebbar sind, wobei mindestens ein fahrzeugfester Scharnierteil (71) sich in x-Richtung erstreckende Langlöcher (84) für die spätere Befestigung am Fahrzeug aufweist.

9. Vorrichtung zum Zusammenbau einer aus einem Strukturteil (2), montagerelevanten Anbauteilen (22 bis 26), nämlich Scharnieren (25, 26), dem Schloß (24) und gegebenenfalls Fensterteilen (22, 23), und weiteren Teilen bestehenden Türe oder Klappe eines Fahrzeuges, die als ortsfeste Lehrenplatte (1) ausgebildet ist, welche Referenzlager (15 bis 19) zur Festlegung des Strukturteiles (2) in allen drei Koordinatenrichtungen und verstellbare Bezugslager (28 bis 31; 38 bis 41; 45 bis 48) zur Festlegung der montagerelevanten Anbauteile (22 bis 26) aufweist, **dadurch gekennzeichnet, dass** Bezugslager für alle montagerelevanten Anbauteile vorgesehen sind und dass deren Verstellung anhand von in der Fertigung des Rohbaues des Fahrzeugkörpers (100) nur an diesem aufgenommenen Daten erfolgt.

10. Vorrichtung nach Anspruch 9, **dadurch gekennzeichnet, dass** die verstellbaren Bezugslager (28 bis 31; 38 bis 41; 45 bis 48) an der Lehrenplatte (1) für die Festlegung der montagerelevanten Anbauteile (22 bis 26) jeweils eine Verstellkonsole (50) aufweisen, die aus so vielen durch Zwischenlegen von Einstellplättchen (58;57,61) verstellbaren Teilkörper (51,52,53) bestehen, als Verstellrichtungen vorgesehen sind, wobei die Einstellplättchen (58;57,61) jeweils in einer Ebene normal zur Verstellrichtung angeordnet und die anliegenden Kontaktebenen (56,60) der Teilkörper von Schrauben (55,63) und Passstiften (59, 62) durchsetzt sind.

11. Vorrichtung nach Anspruch 10, **dadurch gekennzeichnet, dass** die Einstellplättchen (58) zu ihrer Aussenkontur hin offene Ausnehmungen (63) für den Durchtritt der Schrauben (55,63) und Passstifte (59,62) aufweisen.

12. Vorrichtung nach Anspruch 10 mit einem in einer ersten Richtung und in einer zweiten Richtung verstellbaren Bezugslager, **dadurch gekennzeichnet, dass** dessen Verstellkonsole (50) aus einem auf der Lehrenplatte fest sitzenden Basiskörper (51) mit einer ersten Kontaktebene (56), einem Zwischenkörper (52) mit einer ersten und einer zweiten Kontaktebene (60) und einem Lagerkörper (53) mit einer zweiten Kontaktebene (60) besteht, wobei die erste Kontaktebene (56) normal zur ersten und die zweite Kontaktebene (60) normal zur zweiten Verstellrichtung sind und wobei zwischen den ersten (56) und den zweiten (60) Kontaktebenen jeweils Einstellplättchen (58; 57,61) eingelegt sind.

13. Vorrichtung nach Anspruch 9, mit verstellbaren Bezugslager zur Festlegung der aus einem fahrzeugfesten (70) und aus einem türfesten (71) Teil bestehenden Scharniere (25,26), **dadurch gekennzeichnet, dass** das Bezugslager (45, 46; 73) den fahrzeugfesten Teil (70) des Scharnieres aufnimmt und mit diesem in x-Richtung verschiebbar (74) ist, dass das Bezugslager (45,46) in y-Richtung und in z-Richtung einstellbar ist, und dass am Bezugslager eine Lehre (76 bis 80) angeordnet ist, die den türfesten Teil (71) des Scharnieres in y-Richtung positioniert.

14. Vorrichtung nach Anspruch 13, wobei der türfeste Teil (71) des Scharnieres (25,26) mindestens zwei Bohrungen (81,82) für die Schrauben zu dessen Verbindung mit der Tür aufweist, **dadurch gekennzeichnet, dass** die Lehre (76 bis 80) eine Führung (77) aufweist, mit der sie im Bezugslager (45,46; 73) in x-Richtung verschiebbar geführt ist und einen Lehrdorn (80) besitzt, der zur Positionierung des türfesten Teiles (71) des Scharnieres in eine der Bohrungen (81,82) einführbar ist.

15. Vorrichtung nach Anspruch 14, **dadurch gekennzeichnet, dass** der Lehrdorn (80) bezüglich der Führung (77) in y-Richtung verstellbar ist.

16. Vorrichtung nach Anspruch 9, **dadurch gekennzeichnet, dass** auf zumindest einem der Bezugslager Sensoren angebracht sind, die ein Signal an eine Leitstelle abgeben.

17. Vorrichtung nach Anspruch 9, **dadurch gekennzeichnet, dass** auf zumindest einem der zweiten Referenzlager (11,12,14) Sensoren angebracht sind, die ein dem ordnungsgemäßen Spannen der Spannvorrichtungen (20) entsprechendes Signal an eine Leitstelle abgeben.

## Claims

1. Method for assembling a vehicle door or flap which is intended for mounting in a vehicle body and comprises a structural part, the mounting-relevant add-on parts, namely hinges (25, 26), the lock (24) and, if appropriate, window parts (22, 23), and further parts, in the following steps:
a) the structural part (2) is positioned on a gauge plate (1) in all three coordinate directions in that it is placed with at least three dedicated reference points (10 to 14) on reference bearings (15 to 19) of the gauge plate and connected releasably to it,
b) all the mounting-relevant add-on parts (22 to 26) are positioned on the gauge plate (1) in all three coordinate directions in that they are placed and fixed on reference bearings (28 to 31; 38 to 41; 45 to 48) mounted on the gauge plate,
c) all the mounting-relevant add-on parts (22 to 26) are firmly connected to the structural part (2) in the positions fixed in such a way,
d) the unit thus produced consisting of the structural part and the mounting-relevant add-on parts is passed to the further mounting steps, in which the further parts are installed or added, wherein the reference bearings (28 to 31; 38 to 41; 45 to 48) of the mounting-relevant add-on parts (22 to 26) are adjusted on the basis of data recorded only on the vehicle body (100) in the manufacture of the bodyshell thereof.

2. Method according to Claim 1, **characterized in that** the data are in each case measured on the vehicle body (100) for which the respective door is intended and the adjustment of the at least one reference bearing (28 to 31; 38 to 41; 45 to 48) is carried out automatically to an extent which is calculated in a computer (95) from the measured data.

3. Method according to Claim 1, wherein the mounting-relevant add-on part is a window frame part (23) or a window (22), **characterized in that** it is positioned with respect to the gauge plate (1) by means of:
a) at least two first reference bearings (28, 29, 30) which are formed as stops in the x-direction and/or in the z-direction and on which the contour of the window (22) and/or of the window frame part (23) is placed,
b) a second reference bearing (31) which is formed as a stop in the y-direction and which is mounted on the gauge plate (1),
c) at least one support (32) on the structural part (2) fastened on the gauge plate (1), in the y-direction.

4. Method according to Claim 3, **characterized in that** two supports (32, 33) for the positioning in the y-direction are provided on the structural part (2), on the first (32) of which the window frame part (23) is placed directly on the structural part (2), and on the second of which the window frame part is placed on the structural part with the interposition of an insert part (33'), wherein a fastening element is provided on both supports.

5. Method according to Claim 4, **characterized in that** shims of selectable thickness are used as insert part (33').

6. Method according to Claim 3, wherein the mounting-relevant add-on part is the lock plate (24) or a part of the lock, **characterized in that** it is positioned with respect to the gauge plate by means of:
a) at least two first reference bearings (38, 39, 40) which are formed as stops in the x-direction and/or in the z-direction and on which the lock plate (24) or a part of the lock is placed,
b) a second reference bearing (41) which is formed as a stop in the y-direction and which is of flat design and mounted on the gauge plate (1).

7. Method according to Claim 3, wherein the mounting-relevant add-on parts are hinges (25, 26) comprising a vehicle-fixed part (70) and a door-fixed part (71), **characterized in that** they are positioned on the gauge plate in the y-direction by inserting the in each case vehicle-fixed hinge part (70) in a first reference bearing (45, 46) and fixing the door-fixed hinge part (71) with respect to the vehicle-fixed hinge part (70) by means of a gauge (76 to 80).

8. Method according to Claim 7, **characterized in that**, in order to position the hinges (25; 26), the first reference bearings (45; 46) can be displaced in the x-direction, wherein at least one vehicle-fixed hinge part (71) has slots (84) extending in the x-direction for subsequent fastening to the vehicle.

9. Device for assembling a vehicle door or flap comprising a structural part (2), mounting-relevant add-on parts (22 to 26), namely hinges (25, 26), the lock (24) and, if appropriate, window parts (22, 23), and further parts, which device is designed as a fixed gauge plate (1) which has reference bearings (15 to 19) for fixing the structural part (2) in all three coordinate directions and adjustable reference bearings (28 to 31; 38 to 41; 45 to 48) for fixing the mounting-relevant add-on parts (22 to 26), **characterized in that** reference bearings are provided for all mounting-relevant add-on parts and **in that** they are adjusted on the basis of data recorded only on the vehicle body (100) in the manufacture of the bodyshell thereof.

10. Device according to Claim 9, **characterized in that** the adjustable reference bearings (28 to 31; 38 to 41; 45 to 48) on the gauge plate (1) for the fixing of the mounting-relevant add-on parts (22 to 26) in each case have an adjusting bracket (50) which comprise the same number of part-bodies (51, 52, 53), which can be adjusted by interposing adjusting shims (58; 57, 61), as adjusting directions are provided, wherein the adjusting shims (58; 57, 61) are in each case arranged in a plane normal to the adjusting direction and the abutting contact planes (56, 60) of the part-bodies are traversed by screws (55, 63) and locating pins (59, 62).

11. Device according to Claim 10, **characterized in that** the adjusting shims (58) have cutouts (63) open towards their outer contour for the passage of the screws (55, 63) and locating pins (59, 62).

12. Device according to Claim 10 with a reference bearing which can be adjusted in a first direction and in a second direction, **characterized in that** its adjusting bracket (50) comprises a base body (51) firmly seated on the gauge plate with a first contact plane (56), an intermediate body (52) with a first and a second contact plane (60) and a bearing body (53) with a second contact plane (60), wherein the first contact plane (56) is normal to the first adjusting direction and the second contact plane (60) is normal to the second adjusting direction, and wherein adjusting shims (58; 57, 61) are in each case inserted between the first (56) and the second (60) contact planes.

13. Device according to Claim 9, with adjustable reference bearings for fixing the hinges (25, 26) consisting of a vehicle-fixed (70) and of a door-fixed (71) part, **characterized in that** the reference bearing (45, 46; 73) receives the vehicle-fixed part (70) of the hinge and can be displaced (74) therewith in the x-direction, **in that** the reference bearing (45, 46) can be adjusted in the y-direction and in the z-direction, and **in that** a gauge (76 to 80) which positions the door-fixed part (71) of the hinge in the y-direction is arranged on the reference bearing.

14. Device according to Claim 13, wherein the door-fixed part (71) of the hinge (25, 26) has at least two holes (81, 82) for the screws for connecting it to the door, **characterized in that** the gauge (76 to 80) has a guide (77) by means of which it is guided displaceably in the reference bearing (45, 46; 73) in the x-direction, and has a gauge mandrel (80) which can be inserted into one of the holes (81, 82) in order to position the door-fixed part (71) of the hinge.

15. Device according to Claim 14, **characterized in that** the gauge mandrel (80) can be adjusted with respect to the guide (77) in the y-direction.

16. Device according to Claim 9, **characterized in that** sensors which emit a signal to a control station are mounted on at least one of the reference bearings.

17. Device according to Claim 9, **characterized in that** sensors are mounted on at least one of the second reference bearings (11, 12, 14), which sensors emit a signal to a control station which corresponds to the proper clamping of the clamping devices (20).

## Revendications

1. Procédé pour assembler une portière ou un hayon d'un véhicule destinés au montage dans une carrosserie de véhicule et se composant d'une partie structurelle, des composants nécessaires au montage, notamment des charnières (25, 26), de la serrure (24) et le cas échéant des parties de fenêtre (22, 23) et d'autres parties, selon les étapes suivantes :
a) la partie structurelle (2) est positionnée, dans les trois directions de coordonnées, au niveau d'une plaque d'étalonnage (1) en ce qu'elle est placée contre au moins trois points de référence (10 à 14) propres au niveau des paliers de référence (15 à 19) de la plaque d'étalonnage et est reliée de façon amovible à elle ;
b) tous les composants (22 à 26) nécessaires au montage sont disposés dans les trois directions de coordonnées au niveau de la plaque d'étalonnage (1) en ce qu'ils sont placés contre les paliers de référence (28 à 31 ; 38 à 41 ; 45 à 48) positionnés sur la plaque d'étalonnage et maintenus fixement en place ;
c) tous les composants (22 à 26) nécessaires au montage sont reliés fixement à la partie structurelle (2) dans les positions ainsi fixées ;
d) l'unité ainsi fabriquée à partir de la partie structurelle et des composants nécessaires au montage est amenée aux étapes de montage suivantes au cours desquelles les parties suivantes vont être insérées et/ou montées ; les paliers de référence (28 à 31 ; 38 à 41 ; 45 à 48) des composants (22 à 26) nécessaires au montage étant réglés à l'aide des seules données captées à cet endroit lors de la fabrication de la coque de la carrosserie de véhicule (100).

2. Procédé selon la revendication 1, **caractérisé en ce que** les données pour lesquelles la portière respective est définie sont respectivement mesurées au niveau de la carrosserie de véhicule (100) et que le réglage de l'au moins un palier de référence (28 à 31 ; 38 à 41 ; 45 à 48) est réalisé de façon automatique suivant des proportions calculées par un ordinateur (95) à partir des données mesurées.

3. Procédé selon la revendication 1, le composant nécessaire au montage étant une pièce d'encadrement de fenêtre (23) ou une fenêtre (22), **caractérisé en ce que** son positionnement par rapport à la plaque d'étalonnage (1) se produit à l'aide :
a) d'au moins deux premiers paliers de référence (28, 29, 30) prenant la forme de butées dans la direction x et/ou dans la direction z et au niveau desquels le contour de la fenêtre (22) et/ou de la pièce d'encadrement de fenêtre (23) est disposé ;
b) d'un deuxième palier de référence (31) prenant la forme d'une butée dans la direction y et placé sur la plaque d'étalonnage (1) ;
c) d'au moins un support (32) situé au niveau de la partie structurelle (2) fixée à la plaque d'étalonnage (1) dans la direction y.

4. Procédé selon la revendication 3, **caractérisé en ce que** deux supports (32, 33) sont prévus au niveau de la partie structurelle (2) pour le positionnement dans la direction y, la pièce d'encadrement de fenêtre (23) étant positionnée directement contre la partie structurelle (2) au niveau dudit premier support (32) et la pièce d'encadrement de fenêtre étant disposée contre la partie structurelle, après intercalage d'une partie d'insertion (33'), au niveau dudit second support, un élément de fixation étant prévu au niveau des deux supports.

5. Procédé selon la revendication 4, **caractérisé en ce que** des plaquettes d'épaisseurs sélectionnables sont encastrées pour servir de partie d'insertion (33').

6. Procédé selon la revendication 3, le composant nécessaire au montage étant la tôle de serrure (24) et/ou une partie de la serrure, **caractérisé en ce que** son positionnement par rapport à la plaque d'étalonnage se produit à l'aide :
a) d'au moins deux premiers paliers de référence (38, 39, 40) prenant la forme de butées dans la direction x et/ou dans la direction z et contre lesquels la tôle de serrure (24) et/ou une partie de la serrure sont placés ;
b) d'un deuxième palier de référence (41) prenant la forme d'une butée dans la direction y et prenant une forme plane et étant placé sur la plaque d'étalonnage (1).

7. Procédé selon la revendication 3, les composants nécessaires au montage se composant de charnières (25, 26) composées d'une partie (70) fixée au véhicule et d'une partie (71) fixée à la portière, **caractérisé en ce que** leur positionnement se produit au niveau de la plaque d'étalonnage dans la direction y par insertion de la partie de charnière (70) respectivement fixée au véhicule dans un premier palier de référence (45, 46) et par fixation de la partie de charnière (71) fixée à la portière par rapport à la partie de charnière (70) fixée au véhicule à l'aide d'un gabarit (76 à 80).

8. Procédé selon la revendication 7, **caractérisé en ce que** pour positionner les charnières (25 ; 26), les premiers paliers de référence (45 ; 46) peuvent être déplacés dans la direction x, au moins une partie de charnière (71) fixée au véhicule comportant des trous oblongs (84) s'étendant dans la direction x pour la fixation ultérieure au véhicule.

9. Dispositif pour assembler une portière ou un hayon d'un véhicule composés d'une partie structurelle (2), de composants (22 à 26) nécessaires au montage, notamment de charnières (25, 26), de la serrure (24) et le cas échéant de parties de fenêtre (22, 23), et d'autres parties, ladite portière ou ledit hayon étant réalisés sous la forme d'une plaque d'étalonnage (1) fixe sur place comprenant des paliers de référence (15 à 19) pour la fixation de la partie structurelle (2) dans les trois directions de coordonnées et des paliers de référence (28 à 31 ; 38 à 41 ; 45 à 48) réglables pour la fixation des composants (22 à 26) nécessaires au montage, **caractérisé en ce que** des paliers de référence sont prévus pour tous les composants nécessaires au montage et que leur réglage est réalisé à l'aide des seules données captées à cet endroit lors de la fabrication de la coque de la carrosserie de véhicule (100).

10. Dispositif selon la revendication 9, **caractérisé en ce que** les paliers de référence (28 à 31 ; 38 à 41 ; 45 à 48) comportent respectivement une console de réglage (50) au niveau de la plaque d'étalonnage (1) pour la fixation des composants (22 à 26) nécessaires au montage, lesdites consoles se composant de tant de parties de corps (51, 52, 53) réglables par intercalage de plaquettes de réglage (58 ; 57, 61) qu'il y a de directions de réglage prévues, les plaquettes de réglage (58 ; 57, 61) étant respectivement disposées dans un plan perpendiculaire à la direction de réglage et les plans de contact (56, 60) connexes des parties de corps étant parsemés de vis (55, 63) et de goujons d'assemblage (59, 62).

11. Dispositif selon la revendication 10, **caractérisé en ce que** les plaquettes de réglage (58) comportent des évidements (63) ouverts en direction de leur contour extérieur pour le passage des vis (55, 63) et des goujons d'assemblage (59, 62).

12. Dispositif selon la revendication 10, avec un palier de référence réglable dans une première direction et dans une deuxième direction, **caractérisé en ce que** sa console de réglage (50) se compose d'un corps de base (51) fixement assis sur la plaque d'étalonnage doté d'un premier plan de contact (56), d'un corps intermédiaire (52) doté d'un premier et d'un deuxième plan de contact (60) et d'un corps de palier (53) doté d'un deuxième plan de contact (60), le premier plan de contact (56) étant perpendiculaire à la première direction de réglage et le deuxième plan de contact (60) étant perpendiculaire à la deuxième direction de réglage et des plaquettes de réglage (58 ; 57, 61) étant respectivement insérées entre les premier (56) et deuxième (60) plans de contact.

13. Dispositif selon la revendication 9, avec des paliers de référence réglables pour fixer les charnières (25, 26) composées d'une partie fixée au véhicule (70) et d'une partie fixée à la portière (71), **caractérisé en ce que** le palier de référence (45, 46 ; 73) reçoit la partie (70) de la charnière fixée au véhicule et peut être réglé avec celle-ci (74) dans la direction x, que le palier de référence (45, 46) peut être réglé dans la direction y et dans la direction z et qu'un gabarit (76 à 80) est disposé au niveau du palier de référence, ledit gabarit positionnant la partie (71) de la charnière fixée à la portière dans la direction y.

14. Dispositif selon la revendication 13, la partie (71) de la charnière (25, 26) fixée à la portière comportant au moins deux alésages (81, 82) prévus pour les vis, pour réaliser la jonction avec la portière, **caractérisé en ce que** le gabarit (76 à 80) comprend un guide (77) avec lequel il est introduit dans le palier de référence (45, 46 ; 73) dans la direction x et possède une broche d'étalonnage (80) qui peut être introduite dans un des alésages (81, 82) pour le positionnement de la partie (71) de la charnière fixée à la portière.

15. Dispositif selon la revendication 14, **caractérisé en ce que** la broche d'étalonnage (80) peut être réglée dans la direction y par rapport au guide (77).

16. Dispositif selon la revendication 9, **caractérisé en ce que** des capteurs sont placés sur au moins un des paliers de référence, lesdits capteurs envoyant un signal à un poste de commande.

17. Dispositif selon la revendication 9, **caractérisé en ce que** des capteurs sont placés sur au moins un des deuxièmes paliers de référence (11, 12, 14), lesdits capteurs envoyant un signal correspondant au serrage effectif des dispositifs de serrage (20) à un poste de commande.
